# EUROPEAN PATENT APPLICATION

(11) **EP 4 726 450 A1**
(43) Date of publication of application: **15.04.2026**
(21) Application number: 24205438.5
(22) Date of filing: 09.10.2024
(51) Int. Cl.: G02B 6/42, G02B 6/30

(54) **ASSEMBLY COMPRISING AN OPTICAL BOARD, A SOCKET AND AN OPTICAL CHIP**

(71) Applicant: vario-optics ag, 9410 Heiden (CH)
(72) Inventor: Betschon, Felix, 9011 St. Gallen (CH); Flöry, Nikolaus, 6850 Dornbirn (AT); Halter, Markus, 9444 Diepoldsau (CH); Bittner, Matthias, 9044 Wald (CH)
(74) Representative: Hepp Wenger Ryffel AG

(57) **Abstract**

The invention concerns an assembly (100) comprising an optical board (10), at least one socket (30) and at least one optical chip (40). The optical board (10) comprises a waveguide structure (11) arranged on an electrical substrate (12) and a coupling element (20) including at least one light deflection element, preferably a reflective surface (21) and having at least one alignment structure (22) for interaction with at least one respective first alignment structure (32) of the socket (30). The socket (30) comprises an optical passage (31), a receptacle (33) for the at least one optical chip (40) and at least one first alignment structure (32) for interaction with the at least one alignment structure (22) of the coupling element (20). The optical chip (40) comprises an optical component (41).

## Description

The invention concerns an assembly comprising an optical board, a socket and an optical chip, a subassembly comprising an optical board and a socket, an optical board, a coupling element, a socket and a method for manufacturing an assembly.

For practical applications the waveguides of an optical board must be coupled to other components in a low-loss manner.

The exact mutual positioning of the waveguide and optical components plays a very significant role for a low-loss coupling-in and coupling-out. Even a shift by a fraction of the optical waveguide core width leads to a considerable reduction of the coupling efficiency, and thus to light losses. However, light loss must be avoided in optical circuits, since they always reduce the signal-to-noise ratio at the exit.

The coupling may be achieved for example by way of a coupling component comprising coupling-in or coupling-out mirrors as disclosed in EP1715368. However, the coupling component arranged on the optical board still must be coupled in low-loss manner to the other components.

This can be done for example by active optical alignment as for example shown in Lars Brusberg et al: "Electro-optical circuit board with single-mode glass waveguide optical interconnects" (published by Fraunhofer IZM).

EP4195885A1 discloses an electronic device comprises an electro-optical circuit package including at least photonic integrated circuit (PIC) having at least one light source and a package substrate, a printed circuit (PCB) including at least one optical connector to receive light from the at least one light source, and multiple liquid metal electrical contacts disposed between the package substrate and the PCB. For aligning the position of the package substrate on the printed circuit board (PCB) light from the light source of the PIC and an optical connector included on the PCB is aligned. For proper alignment of the components the electro-optical circuit package has to include a light source which may give reason for additional costs.

US11562942B2 discloses a chip carrier socket for an electronic-photonic integrated-circuit (EPIC) assembly comprising a carrier bottom and a carrier top configured to mate to the carrier bottom while enclosing the EPIC assembly within an enclosed cavity. Either or both of the carrier bottom and the bottom top comprises an optical via passing from one surface to another of the carrier bottom or carrier top.

Usually, an optical chip cannot be removed after its assembly. Repairing and reworking hence is difficult or even impossible. Thus, the whole assembly has to be exchanged which can be cost intensive.

It is therefore an object of the present invention to provide an assembly comprising an optical board, a socket and a chip, a subassembly comprising an optical board and a socket, an optical board, a coupling element, a socket and a method for manufacturing an assembly, which avoid or reduce the disadvantages of the known and in particular allow manufacturing in a simple and inexpensive manner and with a mass production, which is suitable for many different applications.

The problem is solved by an assembly according to claim 1.

The assembly comprises an optical board, at least one socket and at least one optical chip.

The optical board comprises a waveguide structure arranged on an electrical substrate and a coupling element. The waveguide structure may at least partly be covered by a further electrical substrate on the opposite side to form a sandwich structure.

The waveguide structure provides for guiding electromagnetic waves in the optical spectrum. It may operate in the single-mode and/or multi-mode regime depending on the used wavelength.

The waveguide structure may comprise at least one waveguide core, preferably embedded in a lower and an upper cladding.

Optical waveguide structures may be manufactured by way of coating a substrate and subsequent photo-lithographic structuring of the layer. Alternatively, a production by dry etching or direct 3D printing of core structures is possible.

The coupling element includes at least one light deflection element, preferably at least one reflective surface. Light deflection may also be achieved by a bended fiber or other means.

The light deflection element may be adapted to focus a light beam into the facet of a waveguide core and/or into a lens.

The deflection element provides for changing the direction of propagation of electromagnetic waves in the optical spectrum, in particular for guiding light from the waveguide core to a specific place on the socket, in particular to an optical passage of the socket.

The coupling element has at least one alignment structure for, preferably mechanical, interaction with at least one respective first alignment structure of the socket.

The coupling element may comprise a further alignment structure, for example a recess, a protrusion, a ridge or a cross, for interaction with a corresponding alignment structure of the waveguide structure. The corresponding alignment structure may be formed simultaneously with the optical waveguide structure, for example in the same photo-lithographic step.

The coupling element may for example be a coupling component as disclosed in EP1715368, which is hereby incorporated by reference.

The socket comprises an optical passage, and a receptacle for the at least one chip.

The optical passage preferably comprises an optical lens system, for example a lens array.

The receptacle may be formed by walls which specify the position of the of the chip.

The receptacle may comprise positioning elements, such as pressed in or imprinted symbols.

The socket further comprises at least one first alignment structure for, preferably mechanical, interaction with the at least one alignment structure of the coupling element.

The alignment structure of the coupling element may comprise at least one pin whereas the first alignment structure of the socket may comprise at least one respective hole.

Preferably, the coupling element comprises at least two alignment structures, which each may interact with respective alignment structures on the socket. This way also the relative orientation in the x-y plane of the optical board and the socket may be determined.

The alignment structure may comprise at least two pins or a plurality of pins for providing also a precise orientation of the socket.

Alternatively the orientation may be determined by an polygonal, for example square, cross-section of the pin and the hole.

Alternatively, the alignment structure of the coupling element may comprise at least one hole, whereas the first alignment structure of the socket may comprise at least one pin.

For aligning, the pin may be placed in the respective hole. A pin/hole connection provides for a releasable form-fit connection.

The accuracy of the placement depends on the mechanical clearance of the corresponding alignment structures.

Preferably, an accuracy of less than +/- 1pm, more preferably of less than +/- 100nm may be achieved.

Preferably, the pin of the alignment structure of the coupling element or of the first alignment structure of the socket is arranged such that the main extension of the pin is perpendicular to a substrate of the optical board. The socket may be put on and if needed may be removed from the optical board from a direction perpendicular to the substrate.

The first alignment structure is arranged on the socket for providing a placement of the socket with respect to the optical board, wherein the optical passage is in, preferably maximum, light guiding contact with the light deflection element. The optical passage of the socket may then be arranged right above a reflective surface of the coupling element arranged on the optical board.

A maximum light guiding contact means that the electromagnetic waves in the optical spectrum may be guided from one element to the other to a maximum extent.

Usually, a maximum light guiding contact between two elements is achieved by active optical alignment, which needs checking the light passing through and shifting at least one element until a maximum amount of light is detected.

The present assembly uses the alignment structure on the coupling element and the first alignment structure on the socket for mutual arrangement of the optical board and the socket, such that a, preferably maximum, light guiding contact is achieved.

The optical chip comprises at least one optical component, such as a detector, a light source, or a waveguide, in particular a photonic integrated circuit (PIC). Preferably the optical chip is attachable or attached to the socket, in particular such that the optical component is in, preferably maximum, light guiding contact with the optical passage of the socket.

The assembly allows easily removal and replacement of the optical chip from the socket and the optical board after it has been assembled.

The optical chip may be removed from the optical board together with the socket.

The assembly preferably supports testing after each step of the assembly process. A defect or an error can be detected early and might even be corrected.

The lifetime of optical components is usually short compared to conventional electrical components. This assembly allows the replacement of optical components without damaging the assembled optical board which can be very expensive.

The optical board may additionally comprise electrical structures. The electrical structures comprise at least one electrical line and at least one electrical connection point arranged on the electrical substrate, preferably on a free side of the electrical substrate.

The free side of the structure is opposite to the side of the electrical substrate, where the waveguide structure is arranged.

The electrical structures may also comprise functional electrical elements, such as electrical chips, resistors, capacitors, connectors, microprocessors, application specific integrated circuits (ASICs).

The alignment structure of the coupling element may be accessible from a free side of the electrical substrate, such that the socket may be connected or connectable to the free side.

Preferably, the free side also provides electrical connections for electrically connecting the socket. Hence, the socket typically is placed on the free side of the optical board.

The electrical substrate may have an opening through which the alignment structure extends and/or which gives access to the alignment structure.

The opening in the electrical structure may also allow the optical wave to pass through from the light deflection element to the optical passage of the socket or vice versa.

Preferably, the coupling element is precisely aligned with at least one optical waveguide core of the waveguide structure of the optical board.

A precise alignment of the coupling element with at least one optical waveguide core means that there is a, preferably maximum, light guiding connection between the optical waveguide core and the light deflection element of the coupling element.

In particular, corresponding alignment features, preferably mechanical alignment features, are arranged on the waveguide structure and on the coupling element which provide a position of the coupling element on the optical board with the precise alignment.

The alignment feature on the optical board may be modelled in the core of the waveguide structure which is not covered by the cladding. The alignment feature can be formed within the same manufacturing step as the waveguide structure and therefore in a very precise way and. This unprotected core typically is not arranged for guiding light. It may be visible and/or mechanically usable.

The socket may comprise at least one electrical passage or via, at least one electrical connection point for electrically connecting the optical board and/or at least one electrical connection point for electrically connecting the optical chip.

The electrical connection point for electrically connecting the optical board may be formed by solder pads, such that a soldered connection is or can be established between the electrical passage of the socket and the electrical structure of the optical board.

The at least one electrical connection point for electrically connecting the optical chip may be formed by a releasable electrical connection element, such as a spring contact. This allows a placement, removal and replacement of the optical chip without tools. Defective optical chips or optical chips not providing an optimal light guiding connection of the optical component and the optical passage of the socket may be easily exchanged.

The socket, in particular the receptacle for the at least one optical chip, may comprise at least one second alignment structure for interaction with a respective alignment structure of the optical chip. Thus, the optical component may be precisely aligned with the optical passage without active optical alignment.

The second alignment structure may comprise a pin, a wall, a hole or a recess for interacting with a corresponding alignment structure of an optical chip.

The second alignment structure guarantees that the optical passage is aligned with the optical component of the optical chip.

The second alignment structure may additionally provide for a match of electrical connection points of the socket and the optical chip.

The socket may comprise at least one mounting structure for, preferably releasably, fixing the optical chip to the socket. The mounting structure may be formed by a hole or a threaded hole for receiving a screw or by a notch open to a lateral side for receiving a clamp.

The mounting structure may comprise clip elements for clamping the optical chip.

The mounting structure may be adapted for mounting and removing the chip from the socket without a tool.

The optical chip may comprise an electrical structure comprising at least one electrical connection point for electrically connecting the socket. Preferably the electrical connection points are adapted for a releasable electrical connection, as provided by spring contacts.

The connection points of the optical chip may be formed by soldered pads.

The optical chip may comprise an alignment structure for interaction with a second alignment structure of the socket.

The optical chip may comprise a recess or hole for interaction with a corresponding protrusion on the socket.

The extensions of the optical chip in x, y-direction and/or z-direction may be formed precise enough relative to the optical component such that the side edges can be used as alignment structures. The optical chip may precisely fit between respective walls of the socket.

The assembly may comprise at least one mounting element for, preferably releasably, fixing the optical chip to the socket, such as a spring, a latch, a bold or a lock.

The mounting element, for example a spring, may be attached to the socket and may clamp the optical chip.

Additionally or alternatively a mounting element such as a spring, may be attached to the optical chip and may clamp the socket, for example grip a mounting structure of the socket.

Additionally or alternatively a separate mounting element, such as a clip, may clamp the optical chip and the socket.

Additionally or alternatively a screw may connect the optical chip and the socket, when the optical chip and/or the socket comprise a respective through hole and/or threaded hole.

The assembly may be provided as a kit of parts, comprising at least one optical board, at least one socket and/or at least one optical chip, preferably comprising a number of optical boards, sockets and/or optical chips.

The kit of parts may comprise a number of different sockets, for example adapted to receive different optical chips, and/or a number of different optical chips, for example comprising optical components of a different kind or being of different sizes.

A specific optical board, a specific socket and/or a specific optical chip may be combined depending on the need of a customer.

Alternatively, the assembly may be provided partly or fully assembled.

The optical chip may be mounted on the socket and the socket may be mounted on the optical board, such that the optical component is in, preferably maximum, light-guiding contact with the waveguide structure.

Preferably, in the fully assembled assembly, an electrical structure of the optical board is electrically connected to an electrical structure of the optical chip.

In particular, at least one electrical connection point of the socket is connected, preferably soldered, to an electrical connection point of the optical board.

The socket may be fixed to the optical board only by soldering or, additionally, the socket may be glued to the optical board.

The optical chip may be releasably fixed to the socket.

The assembly may further comprise a downholder plate, which is arranged on top of the optical chip. The downholder plate may be fixed to the socket and thereby hold the optical chip in fixed position.

The downholder plate may have a heat dissipating surface, for example comprising cooling fins, facing away from the optical chip.

The problem is also solved by a subassembly according to claim 10 for forming an assembly as described above.

The subassembly comprises an optical board and a socket.

The optical board comprises a waveguide structure as described above arranged on an electrical substrate and a coupling element as described above.

The socket comprises an optical passage, preferably as described above, a receptacle for at least one chip, preferably as described above, and a first alignment structure for interaction with the alignment structure of the coupling element, preferably as described above. The alignment structure of the coupling element interacts with alignment structure of the socket, such that the light deflection element of the coupling element is in, preferably maximum, light guiding contact with the optical passage of the socket.

The subassembly provides for easy mounting an optical chip which does have to be specifically prepared for placing, mounting and connecting to the optical board, since alignment and connection structures may be made available by the subassembly and eventually a separate fixing element.

A second alignment structure of the socket may guarantee that the optical component of an optical chip gets in, preferably maximum, light guiding contact with the optical passage of the socket, which can be in, preferably maximum, light guiding contact with the waveguide core.

Alternatively or additionally it is possible to shift the optical chip until there is a, preferably maximum, light guiding connection between the optical component of the optical chip and the waveguide structure of the optical board.

The subassembly may be provided as a kit of parts, for example comprising a plurality of sockets, wherein each is specifically designed for a specific optical chip.

Alternatively, the subassembly may be provided fully assembled. At least one electrical connection point of the socket may be soldered to an electrical connection point of the optical board.

Additionally, the socket may be glued to the optical board.

The problem is also solved by an optical board according to claim 11 for forming an assembly as described above and/or for forming a subassembly as described above.

The optical board comprises a waveguide structure, preferably as described above, arranged on an electrical substrate and a coupling element as described above.

As the coupling element comprises an alignment structure for interaction with a respective first alignment structure of a socket, the optical board is prepared for receiving a socket, such that the optical passage of the socket is in, preferably maximum, light guiding contact with the core of the waveguide structure.

The optical board may receive a socket adapted to be connected with a specific optical chip.

The optical board may comprise a mounting component, such as a spring, a hole or a threaded hole for, preferably releasably, fixing a socket and/or a subassembly comprising a socket and an optical chip.

In particular, a combination of a socket and an optical chip may be releasably mounted to the optical board, preferably by using the mounting component.

Alternatively the optical board may be prepared for fixedly connecting a socket and/or a subassembly comprising a socket and an optical chip. The optical board may comprise soldering pads for soldering electrical connections and/or glue points.

In the subassembly comprising a socket and an optical chip the optical chip may be fixedly mounted to the socket. The subassembly comprising a socket and an optical chip preferably comprises a first alignment structure for interacting with the alignment structure of the coupling element.

Alternatively or additionally for mounting it may be possible to shift the subassembly comprising a socket and an optical chip until there is a, preferably maximum, light guiding connection between the optical component of the optical chip and the waveguide structure of the optical board.

The problem is also solved by a coupling element according to claim 13 for an optical board comprising a waveguide structure arranged on an electrical substrate as described above.

The coupling element comprises at least one light deflection element, preferably a reflective surface, preferably as described above.

The coupling element has an alignment structure, in particular a pin or a hole, adapted for interaction with a respective first alignment structure of a socket to be placed on the optical board.

The coupling element may be arranged with respect to the waveguide structure of the optical board, such that the alignment structure is accessible from a free side of the electrical substrate.

The problem is also solved by a socket according to claim 14 for forming an assembly as described above and/or for forming a subassembly comprising and optical board and a socket as described above and/or for forming a subassembly comprising a socket and an optical chip.

The socket comprises an optical passage, preferably comprising an optical lens system, a receptacle for at least one optical chip, preferably as described above, and a first alignment structure for interaction with an alignment structure of a coupling element mounted to an optical board.

Preferably, the socket is a socket as described above.

The socket comprises at least two interfaces, preferably arranged on opposite sides. One interface is for connection to an optical board, the other interface for receiving an optical chip.

The first alignment structure provides for a, preferably maximum, light guiding contact with a waveguide structure of the optical board, which is a condition for a, preferably maximum, light guiding contact between the waveguide structure of the optical board and the optical component of the optical chip.

The problem is also solved by a subassembly comprising a socket and an optical chip for forming an assembly as described above.

The socket comprises an optical passage, preferably as described above, a receptacle for at least one chip, preferably as described above, and a first alignment structure for interaction with the alignment structure of the coupling element of an optical board, preferably as described above.

Preferably, the socket is a socket as described above.

The socket comprises at least two interfaces, preferably arranged on opposite sides. One interface is for connection to an optical board, the other interface for receiving an optical chip.

Preferably, the optical chip is an optical chip as described above.

The subassembly comprising the socket and the optical chip may be placed on an optical board part for part. Alternatively, the subassembly may be mounted together and may be placed on an optical board as one piece. Preferably the optical chip is mounted on the socket, such that the optical component is in light-guiding contact with the optical passage.

The problem is also solved by method according to claim 16 for manufacturing an assembly as described above, comprising the steps of forming an optical board.

An electrical substrate with a waveguide structure arranged on the electrical substrate is provided. The electrical substrate may comprise an electrical structure as described above.

A coupling element, preferably as described above, comprising at least one light deflection element, preferably a reflective surface, and having an alignment structure for interaction with a respective first alignment structure of a socket is placed in a, preferably maximum, light guiding contact with the waveguide structure.

An alignment structure, for example a recess or a protrusion, of the coupling element may be coupled to a respective alignment structure of the waveguide structure, such that the waveguide core of the waveguide structure is in light guiding contact with the light deflection element.

The alignment structure of the waveguide structure may be manufactured in a preceding step as for example described in EP1715368.

In a subsequent step a socket, preferably as described above, comprising an optical passage, a receptacle for at least one optical chip and a first alignment structure for interaction with the alignment structure of the coupling element is placed on the optical board, such that the alignment structure of the coupling element interacts with the first alignment structure of socket.

The waveguide structure then is in, preferably maximum, light guiding contact with the optical passage.

The socket may already be connected to an optical chip and be part of a subassembly comprising a socket and an optical chip, when placed on the optical board.

Subsequently the correct position of the socket may be verified by testing the optical alignment of the optical passage and the waveguide structure.

An optical source and an optical detector may be temporarily mounted to the optical passage and to the waveguide core respectively. If light is not guided from the waveguide structure to the optical passage or vice versa to a sufficient extent, the socket and/or the coupling element have to be exchanged and the procedure described before has to be repeated.

In a subsequent step at least one electrical connection point of the optical board is connected with an electrical connection point of the socket, in particular by soldering, by providing an electrically guiding glue or by providing an electrically connecting element.

For example, the socket may be screwed down to the optical board to press spring contacts of the optical board or of the socket towards respective counter contacts.

In this case the socket may be removed, for example if no proper optical connection can be established.

Additionally, the socket may be glued to the optical board.

An adhesive may be deposited before the socket is placed on the optical board, for example before the first alignment structure is plugged on the pins of the coupling element. After placing the socket, the adhesive may be cured, e.g. using UV-light. Preferably the adhesive is robust against high temperature, which may arise during soldering the electrical contacts.

Bevor curing the adhesive, the correct position of the socket may be verified, for example by applying a light source to the optical passage and a light detector to the optical waveguide or vice versa.

Subsequently an optical chip, preferably as described above, may be placed on the socket.

The optical chip may be placed, such that a second alignment structure of the socket interacts with a respective alignment structure of the optical chip. This step solely may provide for a maximum light guiding contact between the optical component and the optical passage of the socket.

The second alignment structure may only serve as z-reference for the z-positioning of the optical chip which has at least one lateral extension that exactly fits within walls of the socket forming the receptacle.

Additionally or alternatively, the optical chip may be shifted within the receptacle of the socket until there is a, preferably maximum, light guiding connection between the optical component of the optical chip and the waveguide structure of the optical board.

The optical chip may be placed using a conventional assembly equipment for placing an optical component which does not contain precise mechanical alignment features.

In this case, a camera system determines exactly the position of the optical component of the optical chip. The optical component can be used as a reference or alternatively any other visible structure which is precise enough relative to the optical component. This visible structure can be for example dedicated fiducials, electrical structures, etc.

The camera system may determine the exact position of the optical component and/or the visible structure with respect to the optical passage of the socket.

The alignment structures may serve purely as z-reference, while the optical chip is brought into the correct x-y-position on the socket by matching the determined positions of an optical component or a visible structure with the socket.

Preferably, the alignment structure provides for an orientation of the socket in the x-y plane.

When the position for maximum light guiding contact is found, the socket may be fixed to the optical board and/or the optical chip may be fixed to the socket.

When the optical component of the optical chip comprises an active element, this may be used for positioning.

After the optical chip is laid onto the socket at least one active area of the optical component may be excited to emit continuous light. A detector may be mounted to the optical waveguide structure at an end of the optical waveguide structure which is opposite to the light deflection element.

An appropriate x-y-position of the optical chip is found, when the light which is passed through the optical passage of the socket and via the light deflection element and the optical waveguide is maximized.

When the optical component comprises a mirror or a detector a light source may be assembled to the optical waveguide structure. The x-y-position of the optical chip may be tested by finding the maximum throughput of light.

An electrical connection point of the socket may be electrically connected with an electrical connection point of the optical chip.

During placement of the optical chip spring contacts of the socket may be connected with electrical connection points of the chip.

As a subsequent step, mounting elements, preferably releasable mounting elements, may be applied for connecting the socket and the optical chip.

For example, a clamp may be applied to embrace lateral sides of the optical chip and the socket.

Further advantageous aspects of the invention are explained in the following by means of exemplary embodiments and the figures. Functionally equal elements are provided with the same reference signs. In the drawings, in a schematic manner:
- Figure 1: shows an example of an optical board;
- Figure 2: shows two examples of a socket;
- Figure 3: shows an example of a subassembly;
- Figure 4: shows a first example of an assembly;
- Figure 5: shows a second example of an assembly.

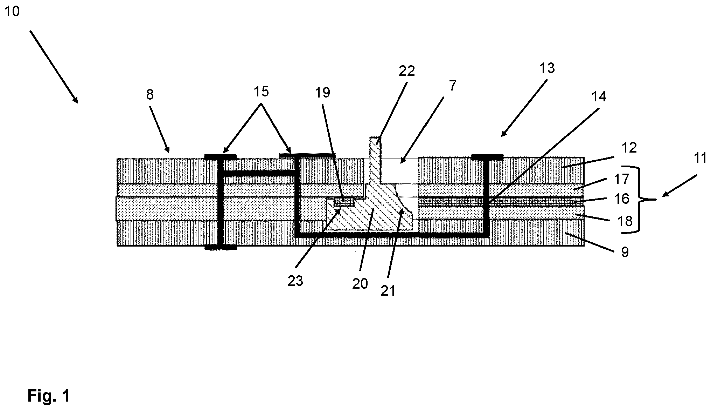

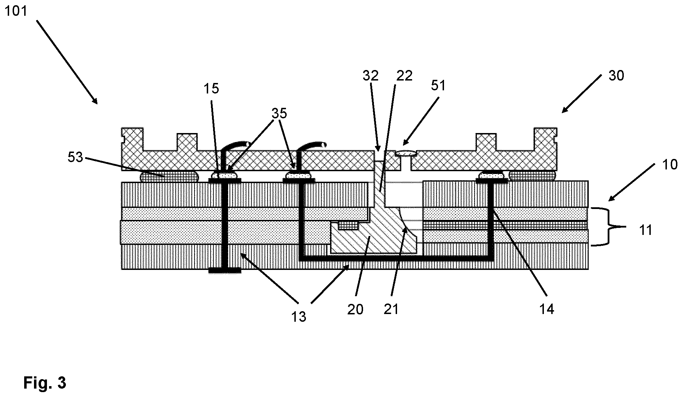

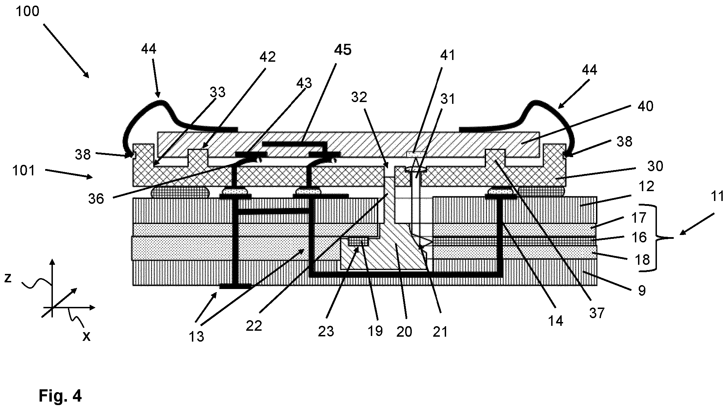

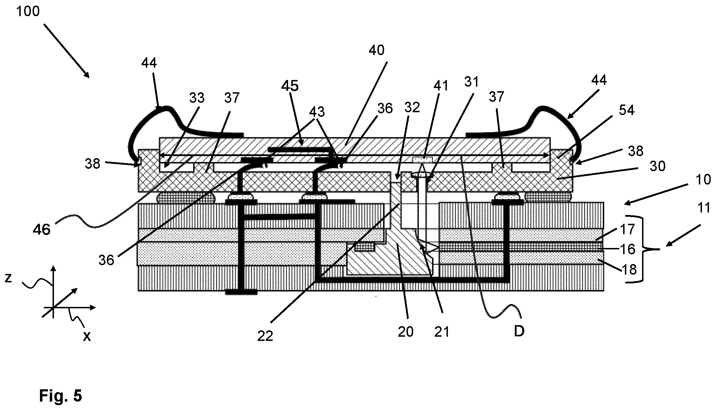

Figure 1 shows an example of an optical board 10 in a sectional view for forming a subassembly 101 as shown in figure 3 and/or for forming an assembly 100 as shown in figures 4 and 5.

The optical board 10 comprises a waveguide structure 11 arranged on an electrical substrate 12.

The waveguide structure 11 comprises a waveguide core 16, embedded in a lower cladding 17 and an upper cladding 18. A further electrical substrate 9 covers the optical waveguide structure 11 on a side opposite to the first electrical substrate 12.

The optical board 10 further comprises a coupling element 20 including a reflective surface as a light deflection element 21.

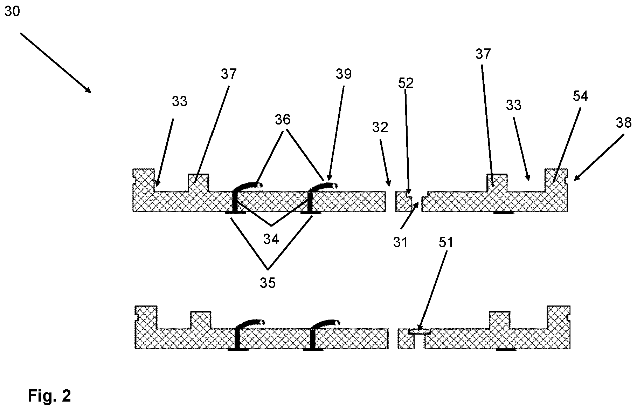

The coupling element 20 has at least one pin as an alignment structure 22, for interacting with a respective first alignment structure 32, in this case a respective hole for receiving a pin, of a socket 30 (see figure 2).

The substrate 19 has an opening 7, which allows an optical wave to pass and through which the pin 22 extends.

The coupling element 20 is arranged on the lower cladding 17.

The coupling element 20 is arranged such that the reflective surface is in maximum light guiding contact with the waveguide structure 11.

A precise positioning of the coupling element 20 is achieved by an alignment feature 23, in this case a recess, which interacts with a respective alignment structure 19, in this case a protrusion formed by waveguide core material, modelled in the optical waveguide structure 11.

As the waveguide structure 11 and the protrusion 19 may be simultaneously manufactured by a photo-lithographic process, the protrusion 19 typically has a highly precise position and is able to align the coupling element very exactly.

The optical board 10 further comprises electrical structures 13, comprising electrical lines 14 and electrical connection points 15.

At least a part of the electrical connection points 15 are arranged on the free side 8 of the electrical substrate 12, that is on the side which is opposite to the side where the optical waveguide structure 11 is arranged.

The electrical connection points 15 and the coupling element 22 form an interface for connecting a socket 30 (see figure 2).

The first alignment structure 22 of the coupling element 20 may be arranged such that the optimal position of the connection element 20 with respect to the waveguide core 16 may be verified with a vertical fiber connector. The arrangement of the pin 22 and the light deflection element 21 may be compatible with a standard ferrule such as an MT ferrule.

Figure 2 shows two examples of a socket 30 in sectional views.

The upper example of the socket 30 comprises an optical passage 31 and electrical passages 34.

The socket 30 comprises a first alignment structure 32, in this case at least one hole, for interacting with a respective pin 22 of the coupling element 20 (see figure 1).

Electrical connection points 35, preferably solder pads, connected to the electrical passages 24 are arranged to be connecteable with corresponding electrical connection points 15 of the optical board 10 (see figures 1, 3, 4).

The solder pads 35 are large enough to ensure good solder contacts and to support large tolerances such that the socket 30 can be precisely arranged for the optical contact by attachment to the pin 22 and simultaneously an electrical contact is provided.

On one side the socket 30 comprises a receptacle 33 for an optical chip 40 (see figure 4).

On the same side the socket 30 comprises electrical connections 36, in this case spring contacts, for electrically connecting an optical chip 40 (see figure 4).

On the same side the socket 30 comprises second alignment structures 37, in this case protrusions, for interacting with respective alignment structures 42, for example holes or recesses, of the optical chip 40 (see figure 4).

The socket 30 further comprises mounting structures 38, in this case notches, for receiving a mounting element 44 for releasable connecting the optical chip 40 (see figures 4 and 5).

Thus, the socket 30 comprises two interfaces: One for connecting an optical chip 40 and one for connecting an optical board 10 (see figures 4 and 5).

The optical passages 31 provides for a light guiding connection between the optical board 10 and the optical chip 40 (see figures 4 and 5).

The lower example of the socket 30 comprises a lens system 51 arranged in the optical passage 31. A frame 52 (see upper example) may be formed in the optical passage 31 for receiving a lens system 51.

Figure 3 shows an example of a subassembly 101 comprising an optical board 10 as shown in figure 1 and a socket 30 as shown in figure 2 in a sectional view.

The pin 22 of the coupling element 20 interacts with a respective first alignment structure 32, in this case a hole, of the socket 30.

Electrical connection points 35 of the socket 30 are soldered to respective electrical connection points 15 of the optical board 10. Additionally, in this example, the socket 30 is fixed to the optical board 10 by adhesive bonds 53.

The subassembly 101 comprising the optical board 10 and the socket 30 is hence made in one piece and is ready for receiving an optical chip 40 (see figures 4 and 5) and connecting the optical chip 40 with the waveguide structure 11 and the electrical structure 13 of the optical board 10 (see figures 4 and 5).

The shape of the lens system 51 and the shape of the light deflection element 21 are chosen in to shape the optical path such that total losses between the optical component 41 of the optical chip 40 (see figure 4) and the waveguide structure 11 are minimized. It is preferable to collimate the vertical part of the light beam in order to be able to freely choose the distance in z-direction between the deflection element 21 and the optical component 41 of the optical chip 40 (see figures 4 and 5). Additionally, the light beam is widened up. This provides greater alignment tolerance in the x- and y-directions and increased robustness to contamination.

The probability of cutting of the light beam decreases with size of the optical beam.

Figure 4 shows a first example of an assembly 100 in a sectional view.

The assembly 100 comprises an optical board 10, a socket 30 and an optical chip 40. The optical board 10 and the socket 30 form a subassembly 101 as shown in figure 3.

The optical chip 40 is placed in the receptacle 33 of the socket 30.

The optical chip 40 comprises an optical component 41 and an electrical structure 45 with electrical connection points 43 electrically connected to respective spring contacts 36 of the socket 30.

The spring contacts 36 establish an electrical connection without soldering. When the optical chip 10 is applied to the socket 30, the spring contacts 36 are bend towards the body of the socket 30 and due to the inherent spring force the spring contacts 36 press against the electrical connection points 43 of the optical chip 40.

The dimension of the spring contact 36 is chosen in order to ensure large tolerances in a lateral and vertical connection directions.

The optical chip 40 comprises an alignment structure 42 in this case a recess, which interacts with a second alignment structure 37, in this case a protrusion, of the socket 30.

The optical chip 40 is arranged such the optical component 41 is in maximum light guiding contact with the waveguide core 16 of the waveguide structure 11 of the optical board 10.

Light may pass the optical passage 31 of the socket 30 and the light deflection element 21 of the coupling element 20 of the optical board.

The optical board 10, the socket 30 and the optical chip 40 are aligned by respective alignment structures 22, 32, 37 and 42 which guarantee a maximum light guiding connection. Additionally, an easy electrical connectability is provided.

The assembly 100 comprises a mounting element 44, in this case a clip mounted on the optical chip 40, for releasably fixing the optical chip 40 to the socket 30. The clip 44 interacts with a notch 38 of the socket 30.

The mounting element 44 provides for a reliable and durable connection.

The optical chip 40 can be applied to and removed from the subassembly 101 without a tool. This allows a fast mounting, and if necessary a fast replacement without damage of the rest of the assembly.

Figure 5 shows a second example of an assembly 100, similar to the first example shown in figure 4, in a sectional view.

In this example, the second alignment structure comprise protrusions 37 which only provide for a position in z-direction. The second alignment structure further comprises walls 54 for an alignment in x- and/or y-direction.

The lateral extension 46 in at least one direction of the optical chip 40 corresponds to the distance D between walls 54 on the socket 30 forming the receptacle 33.

## Claims

1. Assembly (100) comprising an optical board (10), at least one socket (30) and at least one optical chip (40),
- wherein the optical board (10) comprises a waveguide structure (11) arranged on an electrical substrate (12) and a coupling element (20) including at least one light deflection element, preferably a reflective surface (21) and having at least one alignment structure (22) for interaction with at least one respective first alignment structure (32) of the socket (30),
- wherein the socket (30) comprises an optical passage (31), a receptacle (33) for the at least one optical chip (40) and at least one first alignment structure (32) for interaction with the at least one alignment structure (22) of the coupling element (20),
- and
wherein the optical chip (40) comprises an optical component (41).

2. Assembly (100) according to claim 1, wherein the alignment structure (22) of the coupling element (20) is accessible from a free side of the electrical substrate (12).

3. Assembly (100) according to any of the preceding claims, wherein the coupling element (20) is precisely aligned with at least one optical waveguide core (16) of the waveguide structure (11), preferably via corresponding alignment features (19, 23) on the waveguide structure (11) and on the coupling element (20).

4. Assembly (100) according to any of the preceding claims,
wherein the socket (30) comprises
at least one second alignment structure (37, 54) for interaction with a respective alignment structure (42) of the optical chip (40).

5. Assembly (100) according to any of the preceding claims, wherein the socket (30) comprises at least one mounting structure (38) for, preferably releasably, fixing the optical chip (40) to the socket (30).

6. Assembly (100) according to any of the preceding claims, wherein the optical chip (40) comprises an alignment structure (42) for interaction with a second alignment structure (37, 54) of the socket (30).

7. Assembly (100) according to any of the preceding claims, wherein the assembly (100), in particular the optical chip (40), comprises a mounting element (44) for releasably fixing the optical chip (40) to the socket (30), in particular for interaction with a respective mounting structure (38) of the socket (30).

8. Assembly (100) according to any of the preceding claims, wherein the optical chip (40) is mounted on the socket (30) and the socket (30) is mounted on the optical board (10), such that the optical component (41) is in light-guiding contact with the waveguide structure (11).

9. Assembly (100) according to claim 8, wherein an electrical structure (13) of the optical board (10) is electrically connected to an electrical structure (45) of the optical chip (40), in particular wherein
- at least one electrical connection point (35) of the socket (30) is connected, preferably soldered, to an electrical connection point (15) of the optical board (10),
and preferably wherein the socket (30) is glued to the optical board (10),
and/or
- the optical chip (40) is releasable fixed to the socket (30) .

10. Subassembly (101) for forming an assembly (100) according to one of claim 1-9, comprising an optical board (10) and a socket (30),
- wherein the optical board (10) comprises a waveguide structure (11) arranged on an electrical substrate (12) and a coupling element (20) including at least one light deflection element, preferably a reflective surface (21), and having an alignment structure (22) for interaction with a respective first alignment structure (32) of the socket (30),
- wherein the socket (30) comprises an optical passage (31), a receptacle (33) for at least one optical chip (40) and a first alignment structure (32) for interaction with the alignment structure (22) of the coupling element (20),
wherein the alignment structure (22) of the coupling element (20) interacts with alignment structure (32) of the socket (30).

11. Optical board (10) for forming an assembly (100) according to any of claim 1-9 and/or for forming an subassembly (101) according to claim 10, comprising a waveguide structure (11) arranged on an electrical substrate (12) and a coupling element (20) including at least one light deflection element, preferably a reflective surface (21), and having an alignment structure (22) for interaction with a respective first alignment structure (32) of the socket (30) .

12. Optical board (10) according to claim 11, comprising a mounting component for, preferably releasably, fixing a socket (30) and/or a subassembly (101) comprising a socket (30) and an optical chip (40).

13. Coupling element (20) for an optical board according to claim 12 comprising a waveguide structure (11) arranged on an electrical substrate (12),
the coupling element (20) comprising at least one light deflection element, preferably a reflective surface (21), and having an alignment structure (22), in particular a pin or a hole, for interaction with a respective first alignment structure (32) of a socket (30), which alignment structure (22) preferable is accessible from a free side of the electrical substrate (12).

14. Socket (30) for forming an assembly (100) according to any of claims 1-9 and/or for forming a subassembly (101) according to claim 10, comprising an optical passage (31), a receptacle (33) for at least one optical chip (40) and a first alignment structure (32) for interaction with an alignment structure (22) of a coupling element (20) mounted to an optical board (10).

15. Subassembly for forming an assembly (100) according to one of claims 1-9, comprising an optical chip (40) and a socket (30), preferably according to claim 14,
- wherein the optical chip (40) comprises an optical component (41), and
- wherein the socket (30) comprises an optical passage (31), a receptacle (33) for at least one optical chip (40) and a first alignment structure (32) for interaction with an alignment structure (22) of a coupling element (20) of an optical board (10),
wherein the optical chip (40) is mounted on the socket (30), such that the optical component (41) is in light-guiding contact with the optical passage (31).

16. Method for manufacturing an assembly (100) according to any of claims 1-9, comprising the steps of forming an optical board (10) by
- providing an electrical substrate (12) with a waveguide structure (11) arranged on the electrical substrate (12),
- place a coupling element (20) comprising at least one light deflection element, preferably a reflective surface (21), and having an alignment structure (22) for interaction with a respective first alignment structure (32) of a socket (30) in a, preferably maximum, light guiding contact with the waveguide structure (11).

17. Method according to claim 16, comprising the subsequent step of placing a socket comprising an optical passage (31), a receptacle (33) for at least one optical chip (40) and a first alignment structure (32) for interaction with the alignment structure (22) of the coupling element (20), on the optical board (10), such that the alignment structure (22) of the coupling element (20) interacts with the first alignment structure (32) of socket (30).

18. Method according to any of claims 16 or 17, comprising the subsequent step of placing an optical chip (40) on the socket (30),
- preferably such that a second alignment structure (37, 54) of the socket (30) interacts with a respective alignment structure (42) of the optical chip (40),
and/or
- preferably such that a second alignment structure (37, 54) comprises protrusions (37) which serve as z-reference for the z-positioning of the optical chip (40) and walls (54), wherein the optical chip has at least one lateral extension (46) that exactly fits within walls (54) of the socket (30) forming the receptacle (33),
and/or
- preferably shifting the optical chip (40) within the receptacle (33) of the socket (30) until there is a, preferably maximum, light guiding connection between the optical component (41) of the optical chip (40) and the waveguide structure (11) of the optical board (10).

19. Method according to claim 18, comprising the subsequent step of applying, preferably releasable, mounting elements (44) for connecting the socket (30) and the optical chip (40) .
